# EUROPÄISCHE PATENTSCHRIFT

(11) **EP 2 899 166 B1**
(45) Veröffentlichungstag und Bekanntmachung des Hinweises auf die Patenterteilung: **20.11.2019**
(21) Anmeldenummer: 15150798.5
(22) Anmeldetag: 12.01.2015
(51) Int. Cl.: C03B 5/237, F23L 15/02, F28D 17/02, F27B 3/26, F28D 21/00, F27D 17/00

(54) **REGENERATOR FÜR GLASSCHMELZWANNEN**
REGENERATOR FOR GLASS MELTING FURNACES
RÉGÉNÉRATEUR DE FOURS DE FUSION DE VERRE

(30) Priorität: 27.01.2014 DE 102014000849
(43) Veröffentlichungstag der Anmeldung: 29.07.2015
(73) Patentinhaber: Beteiligungen Sorg GmbH & Co. KG, 97816 Lohr am Main (DE)
(72) Erfinder: Sorg, Alexander, 63739 Aschaffenburg (DE); Lindig, Matthias, 55218 Ingelheim (DE); Breitfelder, Thomas, 97816 Lohr am Main (DE)
(74) Vertreter: Keil & Schaafhausen Patent- und Rechtsanwälte PartGmbB

(56) Entgegenhaltungen:
- BE-A- 447 935
- FR-A- 1 202 858
- GB-A- 707 607
- US-A- 2 068 924

## Beschreibung

Die Erfindung betrifft ein System mit einem Regenerator und einer mit dem Regenerator verbundenen Glasschmelzwanne, wobei der Regenerator zur Speicherung von Abwärme aus Verbrennungszyklen und zur Abgabe der gespeicherten Wärme an von außen zugeführte Oxidationsgase mit einer gasdurchlässigen Kammergitterung eingerichtet ist, wobei die Kammergitterung aus Regenerativkammern mit einem Kammerbesatz aus feuerfesten Steinen, die von seitlichen Wandelementen zusammengehalten werden, einer oberen Begrenzungsfläche und einer unteren Begrenzungsfläche besteht, die Abstände von einer Kammerdecke und einem Kammerboden aufweisen, wobei über der Kammergitterung ein Deckenbereich für die in die Kammergitterung eintretenden Verbrennungsgase und die aus der Kammergitterung austretenden Oxidationsgase angeordnet ist, wobei der Deckenbereich über einen Brennerport mit der Glasschmelzwanne verbunden ist, wobei der senkrechte Querschnitt des Brennerports zumindest teilweise unterhalb der oberen Begrenzungsfläche der Kammergitterung in den Deckenbereich einmündend angeordnet ist und wobei sich an die Kammerdecke ein weiterer Deckenabschnitt anschließt, der den Deckenbereich nach oben abschließt und von einer nach unten ragenden Abschlusswand begrenzt wird, die mit dem Brennerhals verbunden ist und zusammen mit dem Wandelement einen Strömungskanal bildet.

In dem Buch von Wolfgang Trier "Glasschmelzöfen Konstruktion und Betriebsverhalten", 1984, Springer-Verlag, Seiten 35 bis 46, wird beschrieben, wie beim Schmelzen von Glas zur Wärmerückgewinnung mittels Wärmeregeneratoren, kurz auch Regeneratoren oder Regenerativkammern genannt, die Abgaswärme zur Vorwärmung der Verbrennungsluft nutzbar gemacht werden kann. Bei den Regenerativkammern sind in einem senkrechten Schacht oder Gehäuse gasdurchlässige Gitterwerke angeordnet, die alternierend von Abgasen bzw. Verbrennungsgasen von Glasschmelzöfen durchströmt werden und die einen Teil der gespeicherten Wärme nach periodischer Umkehr der Strömungsrichtung an das Oxidationsgas abgeben, wodurch der thermische Wirkungsgrad der gesamten Anlage beträchtlich gesteigert werden kann. Der seitlich angesetzte Brennerport der Schmelzwanne liegt dabei oberhalb der oberen Begrenzungsfläche des Gitterwerks. Dies hat je nach Leistung des Schmelzofens beträchtliche Bauhöhen der Regeneratoren zur Folge.

Die Dimensionierung der Gitterwerke richtet sich im Wesentlichen nach der Gesamtleistung der Glasschmelzwannen. Bei zunehmender Bauhöhe des Regenerators und festgelegter Position der Glasschmelzwannen erfordert dies entweder einen tiefergelegtes Fundament oder einen erhöhten Flächenbedarf. Beides bringt erhebliche Nachteile mit sich.

In der US 2 068 924 und in der FR 1 202 858 A ist daher bereits vorgeschlagen worden, bei einem Regenerator den Brennerport so anzuordnen, dass er unterhalb der Kammergitterung in den Deckenraum mündet. Dadurch wird aber zwischen der oberen Kammergitterung und dem Brennerport eine Trennwand benötigt, die von beiden Seiten thermisch stark belastet wird und ständig dem korrosiven Abgas der Schmelzwanne ausgesetzt ist. Dies gilt insbesondere für den Bereich der oberen Lagen der feuerfesten Steine der Regenerativkammern, die bei einem Feuerwechsel einem erheblichen Thermoschock ausgesetzt sind.

GB707607 A lehrt die Kühlung des Fundamentbereichs von Regeneratoren.

US2068924 A offenbart U-förmige Strömungswege in Regeneratoren.

Der Erfindung liegt daher die Aufgabe zugrunde, bei einem System der eingangs genannten Art die Standfestigkeit des als Trennwand dienenden Wandelementes zu erhöhen.

Diese Aufgabe wird erfindungsgemäß dadurch gelöst, dass der Abschnitt des seitlichen Wandelements zwischen dem im Wesentlichen senkrecht verlaufenden Strömungskanal und dem oberen Bereich der Kammergitterung als Zwischenwand mit einer darin angeordneten Kühldurchführung ausgebildet ist.

Es hat sich als vorteilhaft erwiesen, dass der Strömungskanal zusammen mit dem Strömungsweg innerhalb der Kammergitterung einen U-förmigen Strömungsweg bildet.

Gemäß einer bevorzugten Ausgestaltung der Erfindung reicht die Zwischenwand vom Boden des Brennerports bis zur Oberkante des Wandelements. In diesem Bereich ist das Wandelement unmittelbar den Verbrennungsgasen des Glasschmelzofens ausgesetzt.

Um eine einfache Kühldurchführung zu ermöglichen, ist erfindungsgemäß vorgesehen, dass in der Zwischenwand Kühlrohre angeordnet sind. Diese verlaufen zweckmäßigerweise waagrecht durch die gesamte Zwischenwand.

Erfindungsgemäß ist weiter vorgesehen, dass die Kühlrohre von Luft oder einem flüssigen oder gasförmigen Kühlmedium durchströmt werden.

Alternativ sind zur Kühlung der Zwischenwand in dieser horizontal übereinander angeordnete Hohlräume ausgebildet, die zur Einführung und zum Abzug eines Kühlmediums zu beiden Seiten Öffnungen aufweisen.

Die erfindungsgemäßen Merkmale der Erfindung lassen sich in vorteilhafter Weise sowohl bei Glasschmelzöfen mit einer als U-Flammenwanne ausgebildeten Glasschmelzwanne einsetzen, die zwei nebeneinander angeordnete Regenerativkammern mit gekühlten Zwischenwänden aufweisen, oder bei Glasschmelzöfen mit einer als Querbrennerwanne ausgebildeten Glasschmelzwanne, die gegenüberliegend angeordnete Regenerativkammern mit gekühlten Zwischenwänden aufweisen.

Die Erfindung wird nachfolgend an zwei Ausführungsbeispielen näher erläutert, die in der Zeichnung dargestellt sind.

Es zeigen:
- Figur 1: in einem Vertikalschnitt den Aufbau einer als U-Flammenwanne ausgebildeten Glasschmelzwanne mit Regenerator,
- Figur 2: einen vergrößerten Ausschnitt aus dem Vertikalschnitt gemäß Figur 1 zur Veranschaulichung der Kühldurchführung in der Zwischenwand des Regenerators,
- Figur 3: eine Draufsicht auf den in Figur 2 gezeigten Regenerator und
- Figur 4: in einem Figur 1 entsprechenden Vertikalschnitt den Aufbau einer als Querbrennerwanne ausgebildeten Glasschmelzwanne mit zwei Regeneratoren.

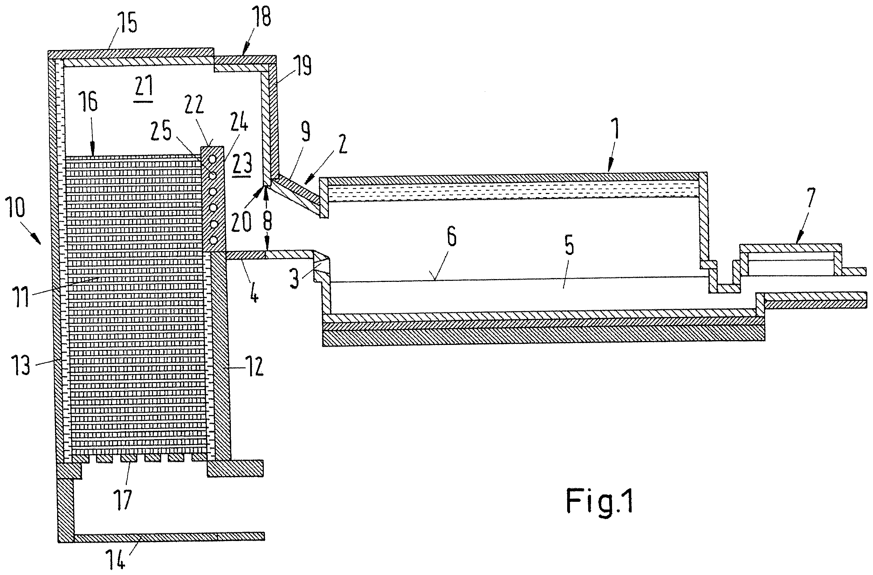

Die in Figur 1 dargestellte Glasschmelzwanne 1 (nachstehend kurz "Schmelzwanne" genannt) ist in einer Ebene gezeigt, die mit der Symmetrieebene eines der beiden Brennerports 2 übereinstimmt. Die Brenner in den Brennerports 2 sind der Einfachheit halber nicht dargestellt. Es können auch sogenannte "Underport"-Brenner verwendet werden, von denen eine Mündung 3 unterhalb des Bodens 4 des Brennerports 2 angedeutet ist. In der Schmelzwanne 1 befindet sich eine Glasschmelze 5 mit einem Schmelzenspiegel 6 und einer Hauptströmungsrichtung zu einer Abzugseinrichtung 7, an die ein nicht dargestellter Verbraucher angeschlossen ist.

Der Brennerport 2 weist einen senkrechten inneren Querschnitt 8 auf. Er ist über den Brennerhals 9 des Brennerports 2 an einen Regenerator 10 angeschlossen.

In diesem sind aus feuerfesten Steinen bestehende Kammergitterungen 11 angeordnet. Diese sind von Wandelementen 12 und 13 umgeben und werden von diesen zusammengehalten. Der Regenerator 10 weist einen jeweils von der Kammergitterung 11 beabstandeten Kammerboden 14 und eine Kammerdecke 15 auf. Die Kammergitterung 11 weist eine obere Begrenzungsfläche 16 und eine untere Begrenzungsfläche 17 auf. An die Kammerdecke 15 schließt sich ein weiterer Deckenabschnitt 18 an, der von einer nach unten ragenden Abschlusswand 19 begrenzt wird, die mit dem Brennerhals 9 verbunden ist.

Die Unterkante 20 der Abschlusswand 19 liegt in dem dargestellten Ausführungsbeispiel unterhalb der oberen Begrenzungsfläche 16 der Kammergitterung 11. Das Wandelement 12 ist in der Höhe entsprechend verkürzt ausgebildet.

Der obere Bereich des Wandelementes 13 bildet mit der Kammerdecke 15, dem weiteren Deckenabschnitt 18 und der Abschlusswand 19 oberhalb der Kammergitterung 11 einen Deckenbereich 21, der auch als Kopfraum bezeichnet wird. Mit dieser Anordnung wird beiderseits des Wandelements 12 und dessen Oberkante 22 im Deckenbereich 21 ein nach unten gerichteter U-förmiger Strömungskanal 23 gebildet.

Neben dem Regenerator 10 befindet sich - in der Darstellung in Figur 1 verdeckt - in spiegelsymmetrischer Anordnung zur Mittenlängsebene der Schmelzwanne 1 ein zweiter Regenerator mit einem zweiten Brennerport. Beide werden in einem periodischen Umkehrzyklus betrieben. Während der eine Regenerator 10 von unten her mit frischem Oxidationsgas beschickt wird, das anschließend mit fossilen Brennstoffen vermischt und verbrannt wird, ist die Strömungsrichtung im anderen Regenerator 10 nach Abschalten der Brenner umgekehrt, wobei die Kammergitterung 11 wieder aufgeheizt wird. Die Taktzeit beträgt üblicherweise etwa 15 bis 25 Minuten.

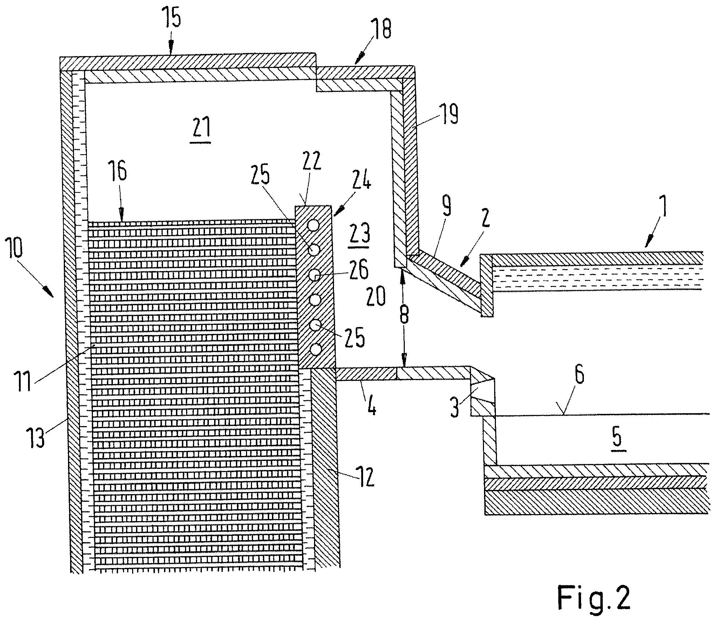

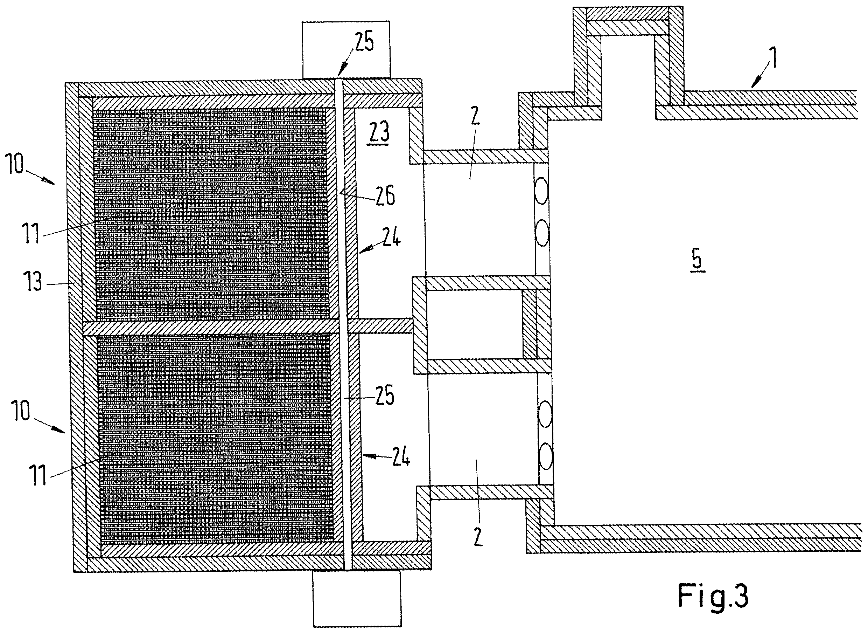

Die oberhalb des Bodens 4 des Brennerports 2 angeordnete Teil des Wandelements 12 ist bei einem derartigen Feuerwechsel von beiden Seiten thermisch stark belastet und ständig dem korrosiven Abgas der Schmelzwanne ausgesetzt. Damit ist die Standfestigkeit der Konstruktion insgesamt stark gefährdet. Daher ist dieser Teil des Wandelements 12 als Zwischenwand 24 mit einer Kühldurchführung 25 ausgebildet. Die Kühldurchführung 25 besteht aus Kühlrohren 26, durch die Luft oder ein sonstiges flüssiges oder gasförmiges Kühlmedium geleitet wird. Wie Figur 2 zeigt, sind in der Zwischenwand 24 mehrere Kühlrohre 26 übereinander angeordnet. Diese durchdringen die Zwischenwand 24 vollständig (siehe Figur 3).

Statt der Kühlrohre 26 können zur Kühlung der Zwischenwand 24 in dieser (nicht dargestellte) horizontal übereinander angeordnete Hohlräume ausgebildet sein, die zur Einführung und zum Abzug eines Kühlmediums seitlich zugänglich ausgebildet sind.

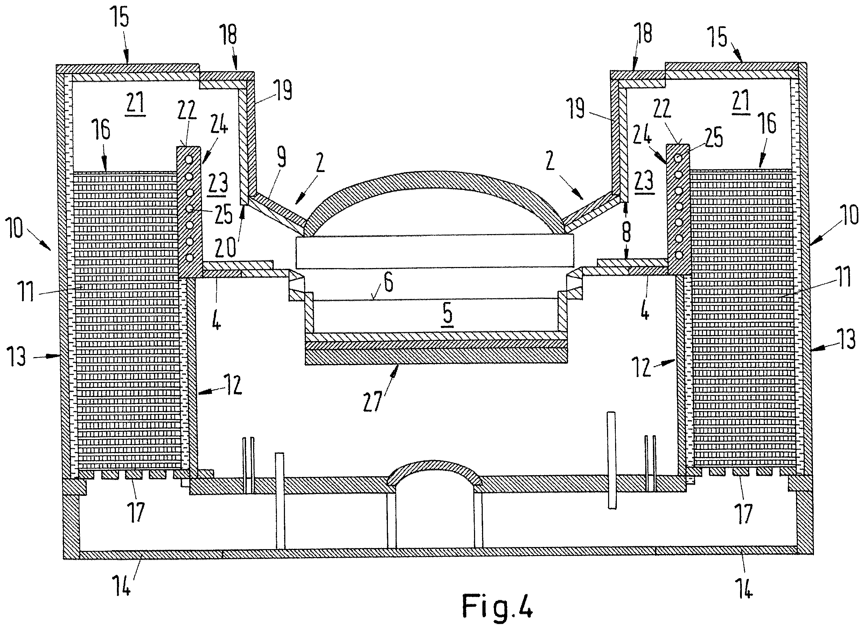

Regeneratoren 10 mit gekühlten Zwischenwänden 24 können in gleicher Weise sowohl in Verbindung mit U-Flammenwannen 1 gemäß Figur 1 als auch mit Querbrennerwannen 27 gemäß Figur 4 verwendet werden. Deren Teile sind weitgehend identisch, so dass in Figur 4 gleiche Teile mit gleichen Bezugszeichen versehen sind. Die Blickrichtung in die Schmelzwanne 27 erfolgt in Richtung von deren Längsachse und der Strömungsrichtung des Glases zur Abzugseinrichtung, die nicht dargestellt ist. Auch bei der Ausführungsform nach Figur 4 werden die spiegelsymmetrisch gegenüber liegenden Regeneratoren 10 zur Wärmerückgewinnung alternierend betrieben.

### Bezugszeichenliste:

- 1: Glasschmelzwanne (U-Flammenwanne)
- 2: Brennerport
- 3: Mündung
- 4: Boden
- 5: Glasschmelze
- 6: Schmelzenspiegel
- 7: Abzugseinrichtung
- 8: Querschnitt
- 9: Brennerhals
- 10: Regenerator (Regenerativkammer)
- 11: Kammergitterung
- 12: Wandelement
- 13: Wandelement
- 14: Kammerboden
- 15: Kammerdecke
- 16: obere Begrenzungsfläche
- 17: untere Begrenzungsfläche
- 18: Deckenabschnitt
- 19: Abschlusswand
- 20: Unterkante
- 21: Deckenbereich (Kopfraum)
- 22: Oberkante
- 23: Strömungskanal
- 24: Zwischenwand
- 25: Kühldurchführung
- 26: Kühlrohre
- 27: Glasschmelzwanne (Querbrennerwanne)

## Patentansprüche

1. System mit einem Regenerator (10) und einer mit dem Regenerator (10) verbundenen Glasschmelzwanne (1; 27), wobei der Regenerator (10) zur Speicherung von Abwärme aus Verbrennungszyklen und zur Abgabe der gespeicherten Wärme an von außen zugeführte Oxidationsgase mit einer gasdurchlässigen Kammergitterung (11) eingerichtet ist, wobei die Kammergitterung (11) aus Regenerativkammern mit einem Kammerbesatz aus feuerfesten Steinen, die von seitlichen Wandelementen (12, 13) zusammengehalten werden, einer oberen Begrenzungsfläche (16) und einer unteren Begrenzungsfläche (17) besteht, die Abstände von einer Kammerdecke (15) und einem Kammerboden (14) aufweisen, wobei über der Kammergitterung (11) ein Deckenbereich (21) für die in die Kammergitterung (11) eintretenden Verbrennungsgase und die aus der Kammergitterung (11) austretenden Oxidationsgase ausgebildet ist, wobei der Deckenbereich (21) über einen Brennerport (2) mit der Glasschmelzwanne (1) verbunden ist, wobei der senkrechte Querschnitt (8) des Brennerports (2) zumindest teilweise unterhalb der oberen Begrenzungsfläche (16) der Kammergitterung (11) in den Deckenbereich (21) einmündend angeordnet ist und wobei sich an die Kammerdecke (15) ein weiterer Deckenabschnitt (18) anschließt, der den Deckenbereich (21) nach oben abschließt und von einer nach unten ragenden Abschlusswand (19) begrenzt wird, die mit dem Brennerhals (9) verbunden ist und zusammen mit dem Wandelement (12) einen Strömungskanal (23) bildet, **dadurch gekennzeichnet, dass** der Abschnitt des seitlichen Wandelements (12) zwischen dem im Wesentlichen senkrecht verlaufenden Strömungskanal (23) und dem oberen Bereich der Kammergitterung (11) als Zwischenwand (24) mit darin angeordneten Kühldurchführungen (25) in der Form von waagerecht durch die Zwischenwand (24) verlaufenden Kühlrohren (26) oder mit darin angeordneten horizontal übereinander angeordneten Hohlräumen zur Kühlung, die zur Einführung und zum Abzug eines Kühlmediums zu beiden Seiten Öffnungen aufweisen, ausgebildet ist.

2. System nach Anspruch 1, **dadurch gekennzeichnet, dass** der Strömungskanal (23) zusammen mit dem Strömungsweg innerhalb der Kammergitterung (11) einen U-förmigen Strömungsweg bildet.

3. System nach Anspruch 1, **dadurch gekennzeichnet, dass** die Zwischenwand (24) vom Boden (4) des Brennerports (2) bis zur Oberkante (22) des Wandelements (12) reicht.

4. System nach Anspruch 1, **dadurch gekennzeichnet, dass** die Kühlrohre (26) mit Luft oder einem flüssigen oder gasförmigen Kühlmedium durchströmt werden.

5. System nach einem der vorherigen Ansprüche, **dadurch gekennzeichnet, dass** ein Glasschmelzofen mit einer als U-Flammenwanne ausgebildeten Glasschmelzwanne (1) zwei nebeneinander angeordnete Regenerativkammern (10) mit gekühlten Zwischenwänden (24) aufweist.

6. System nach einem der Ansprüche 1 bis 4, **dadurch gekennzeichnet, dass** ein Glasschmelzofen mit einer als Querbrennerwanne ausgebildeten Glasschmelzwanne (26) gegenüberliegend angeordnete Regenerativkammern (10) mit gekühlten Zwischenwänden (24) aufweist.

## Claims

1. A system having a regenerator (10) and a glass-melting tank (1; 27) connected to the regenerator (10), wherein the regenerator (10) is set up for the storage of waste heat from combustion cycles and for the delivery of stored heat to oxidation gases supplied from outside with a gas-permeable chamber grid (11), wherein the chamber grid (11) comprises regenerative chambers with a chamber edging made of refractory bricks which are held together by lateral wall elements (12, 13), an upper delimiting surface (16) and a lower delimiting surface (17) which are spaced apart from a chamber ceiling (15) and a chamber floor (14), wherein a ceiling region (21) for the combustion gases entering the chamber grid (11) and the oxidation gases leaving is formed above the chamber grid (11), wherein the ceiling region (21) is connected to the glass-melting tank (1) via a burner port (2), wherein the perpendicular cross section (8) of the burner port (2) is arranged at least partially below the upper delimiting surface (16) of the chamber grid (11) opening out into the ceiling region (21) and wherein a further ceiling portion (18) is attached to the chamber ceiling (15), which ceiling portion terminates the ceiling region (21) upwardly and is delimited by a downwardly projecting end wall (19) which is connected to the burner neck (9) and forms a flow channel (23) along with the wall element (12), **characterized in that** the portion of the lateral wall element (12) between the substantially perpendicularly running flow channel (23) and the upper region of the chamber grid (11) is configured as a partition wall (24) with cooling ducts (25) arranged therein in the form of cooling pipes (26) running horizontally through the partition wall (24) or with hollow chambers for cooling arranged therein horizontally above one another which have openings on both sides for introducing and removing a cooling medium.

2. System according to claim 1, **characterized in that** the flow channel (23) forms a U-shaped flow path along with the flow path within the chamber grid (11).

3. System according to claim 1, **characterized in that** the partition wall (24) extends from the floor (4) of the burner port (2) to the upper edge (22) of the wall element (12).

4. System according to claim 1, **characterized in that** the cooling tubes (26) have air or a liquid or gaseous cooling medium flowing through them.

5. System according to one of the preceding claims, **characterized in that** a glass-melting furnace with a glass-melting tank (1) configured as an end-fired furnace has two regenerative chambers (10) with cooled partition walls (24) arranged alongside one another.

6. System according to one of claims 1 to 4, **characterized in that** a glass-melting furnace with a glass-melting tank (26) configured as a cross-burner tank has regenerative chambers (10) with cooled partition walls (24) arranged opposite.

## Revendications

1. Système, pourvu d'un régénérateur (10) et d'une cuve de fusion de verre (1 ; 27) reliée avec le régénérateur (10), pour accumuler de la chaleur perdue provenant de cycles de combustion et pour restituer la chaleur accumulée à des gaz oxydants alimentés par l'extérieur, le régénérateur (10) étant aménagé avec un empilage de chambres (11) perméable au gaz, l'empilage de chambres (11) étant constitué de chambres de régénération pourvues d'une garniture de chambre en pierres réfractaires, qui sont maintenues les unes avec les autres par des éléments latéraux de paroi (12, 13), d'une surface de délimitation supérieure (16) et d'une surface de délimitation inférieure (17), qui présentent des écarts entre un fond supérieur de chambre (15) et un fond inférieur de chambre (14), au-dessus de l'empilage de chambres (11) étant conçue une zone de fond supérieur (21) pour les gaz de combustion pénétrant dans l'empilage de chambres (11) et les gaz d'oxydation sortant de l'empilage de chambres (11), la zone de fond supérieur (21) étant reliée par l'intermédiaire d'un port de brûleur (2) avec la cuve de fusion de verre (1), la section transversale (8) verticale du port de brûleur (2) étant placée au moins partiellement en-dessous de la surface de délimitation inférieure (16) de l'empilage de chambres (11), en débouchant dans la zone de fond supérieur (21) et au fond supérieur de chambre (15) se raccordant un autre segment de fond supérieur (18) qui ferme la zone de fond supérieur (21) sur le dessus et qui est délimité par une paroi de terminaison (19) saillant vers le bas, qui est reliée avec le col de cygne (9) et qui, conjointement avec l'élément de paroi (12) forme un canal d'écoulement (23), **caractérisé en ce que** le segment de l'élément de paroi latéral (12) est conçu entre le canal d'écoulement (23) s'écoulant sensiblement à la verticale et la zone supérieure de l'empilage de chambres (11) sous la forme d'une paroi intermédiaire (24) pourvue de passages de refroidissement placés dans celle-ci sous la forme de tubes de refroidissement (26) s'écoulant à l'horizontale à travers la paroi intermédiaire (24) ou pourvue de cavités placées dans celle-ci, superposées à l'horizontale, pour le refroidissement, qui pour introduire et soutirer un agent de refroidissement, comportent des orifices sur les deux côtés.

2. Système selon la revendication 1, **caractérisé en ce que** le canal d'écoulement (23) forme conjointement avec le trajet d'écoulement à l'intérieur de l'empilage de chambres (11) un trajet d'écoulement en forme de U.

3. Système selon la revendication 1, **caractérisé en ce que** la paroi intermédiaire (24) va du fond inférieur (4) du port de brûleur (2) jusqu'à l'arête supérieure (22) de l'élément de paroi (12).

4. Système selon la revendication 1, **caractérisé en ce que** les tubes de refroidissement (26) sont traversés par de l'air ou par un agent de refroidissement liquide ou gazeux.

5. Système selon l'une quelconque des revendications précédentes, **caractérisé en ce qu'**un four de fusion de verre pourvu d'une cuve de fusion de verre (1) conçue sous la forme d'une cuve à flamme en forme de U comporte deux chambres de régénération (10) placées côte à côte, dotées de parois intermédiaires (24) refroidies.

6. Système selon l'une quelconque des revendications 1 à 4, **caractérisé en ce qu'**un four de fusion de verre pourvu d'une cuve de fusion de verre (26) conçue sous la forme d'une cuve à brûleurs transversaux comporte des chambres de régénération (10) placées côte à côte, dotées de parois intermédiaires (24) refroidies.
